(19) **Europäisches Patentamt**
**European Patent Office**
**Office européen des brevets**

(11) **EP 1 449 319 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(21) Anmeldenummer: **02798244.6**

(22) Anmeldetag: **19.11.2002**

(51) Int Cl.:
*H04J 3/06* (2006.01)     *H04L 7/00* (2006.01)

(86) Internationale Anmeldenummer:
**PCT/DE2002/004263**

(87) Internationale Veröffentlichungsnummer:
**WO 2003/047137 (05.06.2003 Gazette 2003/23)**

(54) **VERFAHREN UND VORRICHTUNG ZUR SYNCHRONISATION VON FUNKSTATIONEN UND ZEITSYNCHRONES FUNKBUSSYSTEM**

METHOD AND DEVICE FOR THE SYNCHRONIZATION OF RADIO STATIONS AND A TIME-SYNCHRONOUS RADIO BUS SYSTEM

PROCEDE ET DISPOSITIF POUR SYNCHRONISER DES STATIONS RADIO ET SYSTEME DE BUS RADIO A SYNCHRONISATION TEMPORELLE

(84) Benannte Vertragsstaaten:
**DE FR GB**

(30) Priorität: **26.11.2001 DE 10157931**

(43) Veröffentlichungstag der Anmeldung:
**25.08.2004 Patentblatt 2004/35**

(73) Patentinhaber: **Symeo GmbH**
**85579 Neubiberg (DE)**

(72) Erfinder:
• **SEISENBERGER, Claus**
**84181 Neufrannhofen (DE)**

• **VOSSIEK, Martin**
**31139 Hildesheim (DE)**

(74) Vertreter: **Pfrang, Tilman et al**
**Meissner Bolte Patentanwälte**
**Rechtsanwälte Partnerschaft mbB**
**Widenmayerstraße 47**
**80538 München (DE)**

(56) Entgegenhaltungen:
**EP-A- 0 380 372    WO-A-92/16063**
**US-A- 5 228 025    US-A- 5 590 161**
**US-A- 5 936 961**

## Beschreibung

Die Erfindung bezieht sich auf ein Verfahren zur Synchronisation von Funkstationen mit den oberbegrifflichen Merkmalen des Patentanspruchs 1, eine Vorrichtung bzw. ein Bussystem zum Durchführen eines solchen Verfahrens sowie Verwendungsmöglichkeiten dafür.

Bei Mikrowellensystemen ist es üblich, detektierte hochfrequente Signale nicht direkt sondern in Relation zu einem Vergleichssignal auszuwerten. Üblicherweise werden Mischer oder Demodulatoren eingesetzt, mit denen ein detektiertes Signal mit einem Vergleichssignal in ein zumeist niederfrequenteres Band heruntergesetzt wird. Besonders vorteilhaft ist es, wenn das Vergleichssignal einen möglichst exakten Zeit- und Frequenz-Bezug zum detektierten Signal aufweist. Je exakter dieser Bezug ist, desto störsicherer und desto einfacher kann auf die im detektierten Signal enthaltenen Information geschlossen werden. Wird das interessierende Signal von einer Sendestation gesendet und in einer räumlich entfernten Empfangsstation in der beschriebenen Art und Weise empfangen und ausgewertet, so ist dieser gewünschte Zeit- und Frequenzbezug nicht ohne weiteres gegeben, da beide Signal, also das in der Sendestation generierte Sendesignal und das in der Empfangsstation generierte Vergleichssignal, aus unterschiedlichen Quellen stammen bzw. aus unterschiedlichen Quellen abgeleitet wurden.

Daher ist es von generellem Interesse, die Quellen in der Sende- und Empfangsstation in irgendeiner Weise aneinander anzukoppeln. Zu diesem Zweck sind unterschiedliche Verfahren und Anordnungen üblich. Ein einfacher Frequenzbezug kann dadurch realisiert werden, dass im Sender und im Empfänger Oszillatoren mit hoher Frequenzstabilität verwendet werden.

Durch z.B. Temperatur oder Alterungsdriften bleibt hier jedoch immer ein unbekannter Rest-Frequenzversatz. Aufwendigere Anordnungen besitzen Mittel, die geeignet sind, den Rest-Frequenzversatz und/oder den Phasenversatz zu bestimmen. Basierend auf den bestimmten Abweichungsgrößen kann dann z.B. die Vergleichsquelle gesteuert oder geregelt werden. Hierzu werden unterschiedlichste Frequenz- und Phasenregelschleifen eingesetzt. Diese Verfahren sind in aller Regel sehr aufwendig und störanfällig, insbesondere dann, wenn die Quelle der Sendequelle, auf die eingeregelt werden soll, nicht die einzige Quelle von Sendesignalen in der Umgebung der Empfangsstation ist.

Existiert ein Rest-Frequenzversatz, so können die Phasen der beiden Quellen in keinem festen Bezug stehen, wobei die Phasen im Prinzip einer Zeitgröße entsprechen. Wird z.B. von der Sendestation eine Zeitmarke gesendet und von der Empfangsstation detektiert, so stimmen beide Zeitreferenzen nur für kurze Zeit überein und laufen dann je nach Rest-Frequenzversatz mehr oder weniger schnell auseinander, da der Takt der "Uhren" nicht genau gleich schnell ist. Des Weiteren ist es nur sehr schwer möglich, sehr exakte Zeitmarken zu senden, da z.B. die Flanken eines Bits nicht beliebig steil sein können, da die zugelassenen Bandbreiten bei Funksystemen gesetzlichen Beschränkungen unterliegen.

Daher bestehen bei Funksystemen häufig folgende Probleme:

Bei Funksystemen im Zeitmultiplexbetrieb sendet eine Sendestation ein Signal zu einer Empfangsstation, die ihrerseits auf dieses Signal nach einem vereinbarten Zeitintervall antwortet. Läuft die "Uhr" in der Empfangsstation nicht exakt synchron zu der "Uhr" in der Sendestation, so ist der Antwortzeitpunkt der Sendestation nie exakt bekannt. Dies verhindert z.B., dass basierend auf der Laufzeit der übertragenen Signale der räumliche Abstand zwischen Sende- und Empfangsstation bestimmt werden kann. Auch erschwert dies, insbesondere bei sehr breitbandig arbeitenden Funksystemen, die Demodulation bzw. die Informations-Extraktion der Empfangssignale.

Bei zeitsynchronen komplexen Funkbussystemen besteht teilweise die Aufgabe, von einer Masterstation eine oder mehrere Informationen an unterschiedliche Slave-Empfangsstationen zu übertragen. Beinhalten diese Informationen z.B. Handlungsanweisungen, so ist es bei einigen Anwendungen wünschenswert, dass diese angewiesenen Handlungen zeitsynchronisiert ablaufen, z.B. wenn bei einer Werkzeugmaschine per Funk mehrere Bearbeitungseinrichtungen angesprochen werden, deren Arbeitsabläufe aber zeitlich sehr kritisch gekoppelt sind. Aus den oben genannten Gründen ist eine solche Zeitsynchronität im Allgemeinen bei Funkbussystemen nicht gegeben. Zum einen werden die Anweisungen zu den einzelnen Slave-Empfangsstationen zumeist sequentiell gesendet zum anderen dauern die angewiesenen Handlungen oft relativ lange. D.h. die "Uhren" in allen Funkstationen müssen sehr exakt synchronisiert sein, um derartige Anwendungen bedienen zu können. Eine Synchronisation, mit z.B. der gängigen DCF-77-Funkuhr, ist häufig wesentlich zu ungenau und mit z.B. GPS-basierten Uhren (GPS: Global Positioning System) häufig zu aufwendig und teilweise auch noch zu ungenau.

WO 92/16063 A beschreibt allgemein ein System zum Aussenden digitaler Daten per Rundfunk und zum Empfangen digitaler Daten mittels zeitaufgeteilten multiplexten Kanälen, gruppiert in Rahmen, wobei jeder Rahmen Mehrfachträgersymbole aufweist, welche Datensymbole und Systemsymbole einschließen, wobei jedes Symbol einen Satz orthogonaler frequenzaufgeteilter multiplexter Träger mit Trägerpositionen innerhalb eines Frequenzrasters mit gleichmäßiger Trägerbeabstandung aufweist. Um in einem solchen System die Möglichkeit einer dynamischen und genauen Synchronisation des lokalen Oszillators des Empfängers mit dem des Senders zu bieten, wobei ein frei laufender Toleranzbereich des lokalen Oszillators des Empfängers viel größer als der eines bekannten Empfängers zugelassen wird, ist das System dadurch gekennzeichnet, dass die Rahmen reguläre Frequenzreferenzsymbole einschließen, welche jeweils eine Information zum Erzeugen eines Spitzenwertes bei zumindest einer Referenzspitzenposition innerhalb des Frequenzrasters tragen, wobei dies getrennt ist durch zumindest eine Trägerposition von den Rändern des Frequenzrasters und durch zumeindest zwei Trägerpositionen von einer schließlich nachfolgenden Referenzspitzenposition. US 5,936,961 A1 betrifft ein Kommunikationssystem, das Mittel zum Empfang von Kommunikationssignalen umfasst, die auf einer Vielzahl von Übertragungskanälen übertragen werden. Ein erstes Ziel der Erfindung in US 5,936,961 A1 ist somit, die Leistungen der Synchronisationsprozedur in einem GSM-System zu verbessern. Außerdem umfasst bei den meisten Funksystemen die Kette zur Übertragung der Funksignale ein Element, das beweglich ist. Die Folge dieses Tatsachenstands ist, daß ein solches Funksignal seine nach dem Dopplereffekt modifizierte Frequenz sieht. Der Begriff Synchronisation in US 5,936,961 A1 wird hier im allgemeinsten Sinne verstanden und umfaßt insbesondere Synchronisationsinformationen, diejenigen, die für die Korrektur der Doppler-Verschiebung nötig sind, diejenigen, die für die Schätzung des Übertragungskanals nötig sind. In US 5,936,961 A1, die Einrichtung zur Schätzung der Doppler-Verschiebung umfaßt (siehe Abbildung 2):

- einen Lokaloszillator (VCO),
- einen Mischer (M), der die Trägerwelle und das Ausgangssignal des Lokaloszillators (VCO) empfängt,
- einen Filter (BP), der das Ausgangssignal des Mischers(M) empfängt, um ein Zwischenfrequenzsignal (IF) zuerzeugen,
- eine Analyseschaltung (MF1, MD2, MF3, CORR), die das Zwischenfrequenzsignal (IF) empfängt, um einVerschiebungssignal (SH) zu erzeugen, das die Frequenzabweichung aufgrund des Dopplereffekts zwischen einertheoretischen Frequenz (ft) und der Frequenz des Zwischenfrequenzsignals (IF) darstellt,
- eine Steuerschaltung (CC), die den Lokaloszillator (VCO) so steuert, daß ausgehend vom Verschiebungssignal (SH) eine Schätzung der Doppler-Verschiebungerstellt wird.

Die Aufgabe der Erfindung besteht darin, ein Verfahren bzw. eine Vorrichtung vorzuschlagen, welche eine verbesserte Synchronisierung von zwei Stationen ermöglichen, die über eine Funkverbindung miteinander kommunizieren.

Diese Aufgabe wird durch ein Verfahren zur Synchronisation von Funkstationen mit den Merkmalen des Patentanspruchs 1 und davon abhängig ausgestaltet durch eine Vorrichtung zum Durchführen eines solchen Verfahrens mit den Merkmalen des Patentanspruchs 17, ein Bussystem mit den Merkmalen des Anspruchs 19 bzw. eine Verwendung eines solchen Verfahrens mit den Merkmalen des Anspruchs 20 gelöst. Vorteilhafte Ausgestaltungen sind Gegenstand abhängiger Ansprüche.

Zweckmäßigerweise wird bei einem Verfahren zum Synchronisieren einer Senderstation und einer Empfängerstation, die über eine Funkschnittstelle in einem funk- oder leitungsgestützten Kommunikationssystem miteinander kommunizieren, wobei in der Senderstation ein Sendesignal mit einer Signalquelle erzeugt und über die Funkschnittstelle ausgesendet wird und in der Empfängerstation ein entsprechendes Empfangssignal von der Funkschnittstelle empfangen und unter Verwendung eines Empfänger-Signalquellensignals von einer an die senderseitige Signalquelle angepassten empfängerseitigen Signalquelle ausgewertet wird, zur jeweils aktuellen Anpassung der Synchronisation sowohl auf das Sendesignal als auch auf das Empfänger-Signalquellensignal eine gleichartige Frequenzmodulation angewendet, wobei das in der Empfängerstation empfangene Empfangssignal mit dem Empfänger-Signalquellensignal zu einem Mischsignal gemischt wird und das Mischsignal hinsichtlich einer Frequenzverstimmung analysiert wird.

Frequenzmodulationen können insbesondere als eine lineare oder streckenweise lineare Rampe mit kontinuierlich steigender und/oder abfallender Frequenz sein. Anstelle einer Rampe können auch beliebige andere Modulationen verwendet werden.

Unter Berücksichtigung eines Proportionalitätswertes, der in einfachen Fällen gleich Eins setzbar ist, sind in der Regel ein konstanter Frequenzdifferenzwert und ein Zeitversatz der Signale zueinander bestimmbar. Zur Lösung kann ein einfaches Gleichungssystem verwendet werden.

Ein solches Verfahren kann in entsprechend ausgestatteten Empfängervorrichtungen oder kombinierten Sende-/ Empfängervorrichtungen durchgeführt werden, die für die Modulation Parameter verwenden, welche in dieser Form auch in den Sendeeinrichtungen bei der Signalerzeugung verwendet werden. Insbesondere bei Verfahren mit einer Anpassung der Modulation an die momentanen Bedürfnisse sind auch die Sendeeinrichtungen so auszustatten, dass bei der Sendesignalerzeugung verschiedene Modulationsparameter generell oder auf Anforderung durch die damit kommunizierende Empfängerstation hintereinander verwendet werden.

Ein zeitsynchronisiertes Bussystem mit zumindest einer Hauptstation und einer Vielzahl von damit kommunizierenden Kommunikationseinrichtungen ist in vielen technischen Bereichen einsetzbar, beispielsweise zur Steuerung technischer Anlagen mit einer zentralen Hauptstation und einer Vielzahl von Arbeitsstationen, die durch die zentrale Hauptstation gesteuert werden.

Ein Ausführungsbeispiel wird nachfolgend anhand der Zeichnung näher erläutert. Es zeigen:

Fig. 1 zwei miteinander kommunizierende Funkstationen;

Fig. 2 zwei Signalformen, wie sie durch einen ersten Signalgenerator in einer Sendeeinrichtung bzw. einen zweiten Signalgenerator in einer Empfangseinrichtung erzeugt werden;

Fig. 3 das Spektrum eines frequenzmodulierten Signals;

Fig. 4 Signale mit verschiedenen Frequenzverläufen;

Fig. 5 eine Ausführungsform einer bevorzugten Sende-/ Empfangseinrichtung;

Fig. 6 eine Hauptstation, die mit mehreren Kommunikationseinrichtungen kommuniziert und

Fig. 7 verschiedene Amplitudenspektren von Frequenzkomponenten.

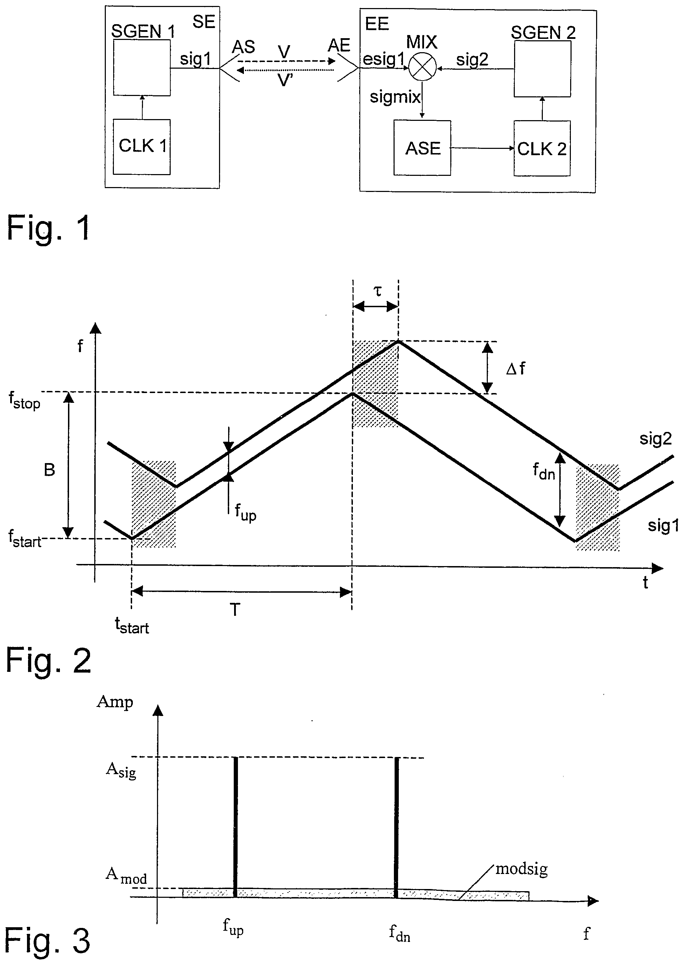

Wie aus Fig. 1 ersichtlich, besteht eine Sendeeinrichtung SE aus verschiedenen Einrichtungen, von denen nachfolgend zur Vereinfachung nur die hier relevanten beschrieben werden. Dies sind insbesondere ein Signalgenerator SGEN 1 zum Erzeugen eines Sendesignals sig1 sowie eine Takteinrichtung CLK 1 zum Erzeugen eines Taktes zum Anregen des Signalgenerators SGEN 1.
Die Sendeeinrichtung SE erzeugt über den Signalgenerator SGEN 1 das Sendesignal sig1, welches über eine Sendeantenne AS über eine Funkschnittstelle V in Richtung der Empfangseinrichtung EE abgestrahlt wird. Die Form des Signals sig1 ist fest vorgegeben, z.B. eine dreieckförmig frequenzmodulierte Rampe, wie in Fig. 2 dargestellt ist. Lediglich Frequenz f und Dauer 2·T des Signals sig1 werden durch einen Basistakt, der in der Takteinrichtung CLK1 der Sendeeinrichtung SE erzeugt wird und die Dauer 2T hat, skaliert.
Die Empfangseinrichtung EE ist in weiten Teilen gleichartig aufgebaut. In dieser wird in gleicher Weise wie in der Sendeeinrichtung SE ein Signal sig2 erzeugt. Zur Signalerzeugung dient wiederum ein Signalgenerator SGEN 2, der mit Hilfe eines Taktes von einer Takteinrichtung CLK 2 angeregt wird. Die Form des Signals sig2 soll der Form des Signals sig1 entsprechen. Der Skalierungsfaktor vom Signal sig2, der durch die Takteinrichtung CLK2 bestimmt wird, ist aber im Allgemeinen, d.h. im unsynchronisierten Fall, zunächst unterschiedlich zu dem vom Signal sig1 der Sendeeinrichtung SE. Auch besteht im Allgemeinen zunächst ein Zeit- und Frequenzoffset zwischen diesen Signalen sig1 und sig2.
Das über eine Antenne AE der Empfangseinrichtung EE empfangene Signal, welches zuvor von der Sendeeinrichtung SE erzeugt und gesendet wurde, wird mit einem Mischer MIX mit dem Signal sig2 gemischt. Das Mischsignal sigmix wird einer Auswerte- und Steuereinrichtung ASE zugeführt, die das Mischsignal sigmix analysiert und basierend auf dem Auswerteergebnis den Takt der Takteinrichtung CLK2 derart modifiziert, dass die Sendeeinrichtung SE und die Empfangseinrichtung EE möglichst synchron laufen.
Das Verfahren zur Synchronisation wird für eine besonders vorteilhafte Signalform im Folgenden näher beschrieben. Als Signalform wird vorzugsweise eine dreieckförmig frequenzmodulierte Rampe, wie sie in Fig. 2 dargestellt ist, verwendet. Von einer Startfrequenz $f_{start}$ ausgehend, wird die Frequenz f des sinusförmigen Sendesignals sig1 direkt linear oder auch linear in Stufen in der Zeit T zunächst bis zu einer Stoppfrequenz $f_{stop}$ erhöht und dann in gleicher Weise wieder bis zur Ausgangsfrequenz $f_{start}$ verringert. Diese Modulation wird vorzugsweise zyklisch wiederholt. Dabei sind die exakten Werte von der Startfrequenz $f_{start}$, von der Stoppfrequenz $f_{stop}$ und von der Zeit T der Takteinrichtung CLK1 abhängig und daher in dem Rahmen, in dem der Basistakt von der Takteinrichtung CLK1 schwanken kann, unbekannt. Das Signal sig2 der Empfangseinrichtung EE wird in gleicher Weise erzeugt. Anhängig von der Takteinrichtung CLK2 der Empfangseinrichtung EE unterscheidet sich das Signal sig2 der Empfangseinrichtung EE aber bezüglich der Startfrequenz $f_{start}$, der Stoppfrequenz $f_{stop}$ und der Zeit T von dem Sendersignal sig1 und es besteht ein zunächst beliebiger Zeitversatz bzw. Zeitoffset zwischen den Signalen sig1 und sig2.
Wird zunächst davon ausgegangen, dass die in dem System verwendeten Signalfrequenzen deutlich größer sind als die Modulationsbandbreite B der zur Synchronisation dienenden Signale sig1 und sig2 und dass die Basistakte von den beiden Takteinrichtungen CLK1 und CLK2 in der selben Größenordnung liegen, so kann man den Unterschied zwischen dem Signal sig1 der Sendeeinrichtung SE und dem Signal sig2 der Empfangseinrichtung EE hinreichend genau durch einen Frequenzversatz $\Delta f$ und einen Zeitoffset $\tau$ beschreiben. Die zumeist leicht unterschiedliche Steigung der Rampen kann bei den genannten Voraussetzungen, die bei üblichen praktischen Ausführungen von Funksystemen im allgemeinen gegeben sind, vernachlässigt werden. In dem Mischer MIX, dem üblicherweise ein Tiefpassfilter nachgeschaltet ist, welches die hochfrequenten Mischanteile eliminiert, wird, wie dies für sich genommen allgemein bekannt ist, die Frequenzdifferenz $\Delta f$ zwischen den beiden Signalen sig1 und sig2 bestimmt.

Es entstehen folgende Mischfrequenzen:

1) ein nahezu monofrequentes Signal mit einer Frequenz $f_{up}$, wenn sich sowohl das Sendersignal sig1 als auch das Empfängersignal sig2 im steigenden Teil der Rampe befinden,

2) ein nahezu monofrequentes Signal mit einer Frequenz $f_{dn}$, wenn sich sowohl das Sendersignal sig1 als auch das Empfängersignal sig2 im fallenden Teil der Rampe befinden und

3) ein stark frequenzmoduliertes Signal modsig, wenn die Rampen der beiden Signale sig1 und sig2 ein umgekehrtes Vorzeichen besitzen, was in Fig. 2 als schraffierter Bereich gekennzeichnet ist.

Wird nun eine Spektralanalyse über die gemischten Signale durchgeführt, vorzugsweise über die Dauer 2T einer kompletten Dreiecksrampe des Empfängersignals sig2, so ergibt sich das in Fig. 3 dargestellte Spektrum. Die Amplituden der monofrequenten Signalanteile $A_{sig}$ sind um so höher, desto geringer der Zeitoffset $\tau$ zwischen den Signalen sig1 und sig2 ist. Die Amplitude des breitbandigen Signals modsig ist im Allgemeinen deutlich kleiner als die monofrequenten Signalanteile $A_{sig}$, außer in dem Spezialfall, in dem die Signale sig1 und sig2 relativ genau um T versetzt sind, da die Signalenergie auf eine große Bandbreite verteilt wird. Aus diesem Spektrum sind die beiden Frequenzen $f_{up}$ und $f_{dn}$ der monofrequenten Signale zu bestimmen. Sind diese bekannt, so kann die Empfangseinrichtung EE sehr genau auf die Sendeeinrichtung SE synchronisiert werden.

Das Verfahren ist nicht nur auf die Signalform, die in Fig. 2 dargestellt ist, anzuwenden. Werden rampenförmige Signale verwendet, ist es lediglich notwendig, zwei Rampenäste mit unterschiedlichen Steigungen zu verwenden, um so zu zwei unterschiedlichen Frequenzwerten zu gelangen, mit denen dann der Frequenzversatz $\Delta f$ und der Zeitoffset $T_{off}$ berechnet werden können. Zur Erläuterung des Synchronisationsprinzips wird nun als Beispiel ein etwas allgemeinerer Fall betrachtet.

Es wird angenommen, dass, wie dargestellt, zwei linear frequenzmodulierte Signale, sogenannte Sweeps, miteinander gemischt werden. Die Modulationsbandbreite B der Signale sei deutlich kleiner als ihre Mittenfrequenz. Die Signalanteile bei der doppelten Grundfrequenz werden, wie bei solchen Mischeranordnungen üblich, durch ein Tiefpassfilter unterdrückt. Die Sweepraten, d.h. Änderungen der Frequenz pro Zeit der beiden Signale sig1 und sig2 unterscheiden sich um einen Proportionalitätswert $\alpha$, und die Startfrequenzen der beiden Sweeps weichen um den konstanten Wert $\Delta f$ voneinander ab. Zudem besitzen die Signale einen Zeitoffset $T_{off}$ zueinander. Man kann zeigen, dass sich in diesem Fall die Momentanfrequenz $f_{sigmix}(t)$ des in der Empfangseinrichtung EE gemischten Signals sigmix, das in der Auswerteeinrichtung ASE analysiert werden soll, wie folgt ergibt:

$$f_{sigmix}(t) = \alpha \cdot \mu \cdot t + \Delta f + \alpha \cdot \mu \cdot (t - T_{off}) - 2 \cdot \mu \cdot t + \mu \cdot \tau,$$

wobei $\mu$ die Sweeprate und $\tau$ die Laufzeit des Signals von der Sendeeinrichtung SE zur Empfangseinrichtung EE darstellt. Wird nun $f_{sigmix}(t)$ nacheinander für zwei verschiedene Sweepraten $\mu_1$ und $\mu_2$ gemessen und angenommen, dass sich die zunächst im unsynchronisierten Fall unbekannten Größen $\Delta f$, $T_{off}$ und $\alpha$ nicht oder zumindest nur sehr wenig zwischen den beiden Messungen ändern, so ergibt sich ein übliches Gleichungssystem mit den folgenden Lösungen für $\Delta f$ und $T_{off}$:

$$\Delta f = \frac{f_{b2}(t) \cdot \mu_1 - f_{b1}(t) \cdot \mu_2}{\mu_1 - \mu_2} \quad \text{bzw.}$$

$$T_{off} = \frac{(f_{b2}(t) - f_{b1}(t)) + 2 \cdot t \cdot \alpha \cdot (\mu_1 - \mu_2) - 2 \cdot t \cdot (\mu_1 - \mu_2) + \tau \cdot (\mu_1 - \mu_2)}{\alpha \cdot (\mu_1 - \mu_2)}.$$

Abhängig von der jeweiligen Systemtopologie und den sich daraus ergebenden Zusammenhängen oder möglichen Vereinfachungen kann mit diesen beiden Gleichungen im Allgemeinen sehr einfach eine hochgenaue Synchronisation der beiden Stationen erfolgen. Im folgenden werden einige typische Möglichkeiten zur Synchronisation dargestellt.

Zur Bestimmung des Frequenzversatzes $\Delta f$ reicht es aus, wenn der Faktor bzw. Quotient k zwischen den beiden verschiedenen Sweepraten, also $k = \mu_1 / \mu_2$, bekannt ist. In diesem Fall ergibt sich der Frequenzversatz $\Delta f$ auch ohne dass die exakte Sweeprate bekannt sein muss zu

$$\Delta f = \frac{f_{b1}(t) - k \cdot f_{b2}(t)}{1 - k} \; .$$

Wird z.B. $\mu_1 = -\mu_2$ also k=-1 gewählt, was technisch sehr einfach zu realisieren ist, so ergibt sich

$$\Delta f = \frac{f_{b1}(t) + f_{b2}(t)}{2} \; .$$

Zur Bestimmung des Zeitoffsets $T_{off}$ ist es notwendig, Annahmen bezüglich des Proportionalitätsfaktors $\alpha$ zu treffen. Häufig ist es möglich, den Proportionalitätsfaktor vereinfacht als $\alpha=1$ und die Sweepraten $\mu_1$ und $\mu_2$ als bekannt anzunehmen. Da die Mittenfrequenz von üblichen Funksystemen im Allgemeinen deutlich größer als die Modulationsbandbreite B ist, wirken sich relative Ungenauigkeiten auf die Größe $\Delta f$ deutlich stärker aus als auf die Abweichung der Sweepraten. Für den Zeitoffset $T_{off}$ ergibt sich unter diesen Annahmen

$$T_{off} = \frac{f_{b2}(t) - f_{b1}(t)}{\mu_1 - \mu_2} + \tau \; .$$

Folglich ist der Zeitoffset $T_{off}$ bis auf die Signallaufzeit $\tau$ bekannt und die beiden Funkstationen SE und EE können auch bezüglich der Zeit t synchronisiert werden.

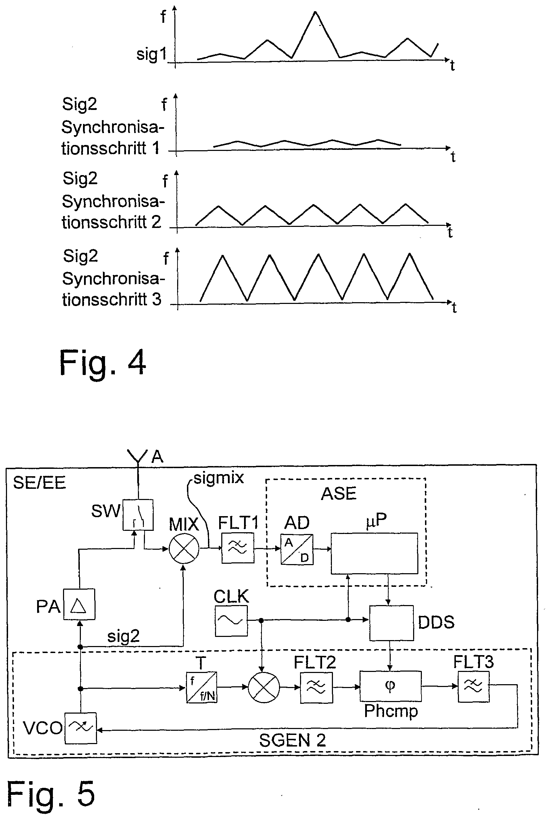

Ist die vereinfachte Annahme $\alpha = 1$ nicht zulässig, so wird folgende Systemtopologie und Auswertung vorgeschlagen. Wird das Signal einer Station, d.h. sowohl die Mittenfrequenz als auch die Modulation aus einer gemeinsamen Referenzfrequenzquelle hergeleitet, z.B. so, wie dies später in Fig. 5 dargestellt wird, also z.B. durch Mischen, Vervielfachen oder mit Hilfe von Phasen/Frequenz-Regelkreisen, so steht der Proportionalitätsfaktor $\alpha$ immer in einem arith-metischen Verhältnis zum Frequenzversatz $\Delta f$. Wird also zunächst der Frequenzversatz $\Delta f$ wie oben beschrieben be-stimmt, so kann daraus der Proportionalitätsfaktor $\alpha$ und demzufolge danach auch der Zeitoffset $T_{off}$ eindeutig abgeleitet werden.

Wird das Empfängersignal sig2 bzw. die Takteinrichtung CLK2 mit den hergeleiteten Zusammenhängen um die entsprechenden Werte $\Delta f$ und $T_{off}$ korrigiert, so laufen die Sendeeinrichtung SE und die Empfangseinrichtung EE synchron, d.h. sowohl die Signale sig1 und sig2 sind nahezu identisch als auch die Taktsignale in CLK1 und CLK2 sind nahezu gleich. Folglich bleibt die Synchronisation auch über längere Zeiträume bestehen.

Betrachtet man die beiden Funkstationen SE und EE anschaulich als Uhren, so laufen die Uhren nach erfolgreicher Synchronisation gleich schnell und bis auf die Signallaufzeit $\tau$ auch absolut exakt gleich.

Im synchronisierten Fall ist die Mischfrequenz $f_{sigmix}(t)$ keine Funktion der Zeit mehr, sondern konstant. Weicht der Proportionalitätsfaktor $\alpha$ nur wenig von 1 ab, so kann auch im unsynchronisierten Fall die Zeitabhängigkeit von $f_{sigmix}$ vernachlässigt werden, was die Auswertung deutlich vereinfacht, da dann das Mischsignal $f_{sigmix}$ mit üblichen Spektralanalysemethoden, wie etwa der Fouriertransformation gemittelt über die gesamte Messdauer bestimmt werden kann und nicht die Momentanfrequenz, d.h. die Ableitung der Signalphase bestimmt werden muss.

Im folgenden werden nun wieder die Signalformen wie in Fig. 2 dargestellt angenommen. Die Ausführungen sind aber natürlich auch auf den allgemeinen Fall zu übertragen. Bei der Ausführung des Systems sind folgende Verbesserungen der Synchronisationsprozedur vorteilhaft. Wie dies vorstehend dargestellt wurde, kann es sein, dass die Signale sig1 und sig2 relativ genau um die Zeit T versetzt sind und daher die beiden Frequenzen $f_{up}$ und $f_{dn}$ nicht oder nicht eindeutig zu detektieren sind. Vorzugsweise behandelt man diesen Spezialfall derart, dass das Empfängersignal sig2 immer dann um vorzugsweise die halbe Zeit T/2 versetzt wird und eine neue Messung gestartet wird, wenn im Spektrum nicht eindeutig die beiden Frequenzen $f_{up}$ und $f_{dn}$ zu detektieren sind.

Um den benötigten Frequenzbereich zur Detektion des Mischsignals sigmix in der Auswerte- und Steuereinrichtung ASE gering zu halten und um etwaige bisher vernachlässigte unterschiedliche Rampensteilheiten im nicht-synchronisierten Fall handhaben zu können, wird die Synchronisation vorzugsweise adaptiv in mehreren Schritten durchgeführt. Hierzu wird die Ausführung aus Fig. 1 vorzugsweise um eine Funkkommunikationsstrecke V' von der Empfangseinrichtung EE zur Sendeeinrichtung SE erweitert. Diese Funkkommunikationsstrecke V' kann nach einem beliebigen Stand der Technik ausgeführt sein und ist hier daher auch nicht näher ausgeführt. Wichtig ist lediglich, dass die Empfangseinrichtung EE Meldungen an die Sendeeinrichtung SE übertragen kann, um den Synchronisationsablauf zu steuern. Vorzugsweise beginnt man die Synchronisation genau wie oben beschrieben, aber mit einer deutlich verringerten Modulationsbandbreite B. Auch bei zunächst großen Zeitoffsetwerten $\tau$ sind die beiden Frequenzen $f_{up}$ und $f_{dn}$ bei weitem nicht so groß, wie wenn die volle Modulationsbandbreite B gewählt worden wäre. Allerdings ist auch die Synchronisation nur entsprechend ungenauer durchzuführen. Basierend auf diesen Werten von den Frequenzen $f_{up}$

und $f_{dn}$ wird daher zunächst eine erste grobe Synchronisation durchgeführt. Sobald diese erste Synchronisation erfolgt ist, teilt die Empfangseinrichtung EE der Sendeeinrichtung SE dies über die Funkschnittstelle V mit. In der Sendeeinrichtung SE und der Empfangseinrichtung EE wird dann die Modulationsbandbreite B erhöht und eine exaktere Synchronisation durchgeführt. Da vor diesem zweiten Schritt schon eine erste Synchronisation erfolgte, sind auch bei erhöhter Bandbreite im zweiten Schritt keine hohen Frequenzen $f_{up}$ und $f_{dn}$ zu erwarten. Die genannten Schritte werden dann bei weiterer Erhöhung der Bandbreite bis zur vollen Modulationsbandbreite B wiederholt. Üblicherweise reichen wenige Schritte, z.B. 1/100 Bandbreite, 1/10 Bandbreite und volle Bandbreite für eine sichere und exakte Synchronisation aus.

Will man auf die zusätzliche Funkkommunikationsstrecke V verzichten, so kann man die schrittweise Synchronisation auch wie folgt realisieren. Die Sendeeinrichtung SE sendet repetierend mehrere Dreiecksrampen mit unterschiedlicher Bandbreite vorzugsweise direkt hintereinander, z.B. N Rampen. Bei N=3 ergäben sich z.B. 1/100 Bandbreite, 1/10 Bandbreite und volle Bandbreite, 1/100 Bandbreite, 1/10 Bandbreite usw. Zu Beginn der Synchronisation wird, wie dies auch aus Fig. 4 ersichtlich ist, für das Empfängersignal sig2 das Rampensignal mit der geringsten Bandbreite gewählt und dieses mindesten N mal wiederholt. Auch die Frequenzanalyse wird vorzugsweise über einen zeitlichen Bereich von 2NT durchgeführt. Die oben dargestellten Frequenzen von $f_{up}$ und $f_{dn}$ ergeben sich dann für eines der N Rampenpaare. Ist diese erste Synchronisation erfolgt, so wird für das Empfängersignal sig2 das Rampensignal mit der nächst höheren Bandbreite in gleicher Weise verwendet usw., bis die N Rampen dieses Signals sig2 die volle Bandbreite erreicht haben.

Alternativ könnte eine erste Synchronisation der Mittenfrequenzen auch mit einem unmodulierten CW-Signal (Continous Wave = Dauerstrich-Signal) erfolgen und in einem oder mehreren Schritten danach der Zeitoffset $T_{off}$ wie zuvor beschrieben korrigiert werden.

Der Mischer Mix kann sowohl als reellwertiger Mischer als auch als Quadraturmischer, der Real- und Imaginärteil des Mischsignals sigmix erzeugt, ausgeführt sein. Wird das Mischsignal sigmix reellwertig gemessen, so werden die negativen Frequenzen im Spektrum, wie allgemein bekannt ist, am Nullpunkt gespiegelt in den positiven Frequenzbereich geklappt. Bei Verwendung eines reellwertiger Mischsignals sigmix kann es sinnvoll sein, für das Mischsignal sigmix eine bestimmte von Null verschiedene Zwischenfrequenz $f_{zf}$ zu wählen, also z.B. das Mischsignal sig2 so zu wählen, dass der Frequenzversatz $\Delta f$ auch nach kompletter Synchronisation nicht Null ist, sondern der Zwischenfrequenz $f_{zf}$ entspricht.

Die Auswerte- und Steuereinrichtung ASE umfasst, wie auch aus dem Beispiel der Fig. 5 ersichtlich, vorzugsweise einen Analog/Digital-Wandler AD, einen Speicher zur digitalen Aufzeichnung des Mischsignals sigmix und einen Prozessor $\mu$P zur Spektralanalyse und zur Steuerung der Takteinrichtung CLK2 bzw. zur Erzeugung und Steuerung des Signals sig2 der Empfangseinrichtung EE.

Die Signalgeneratoren werden vorzugsweise unter Verwendung eines Frequenzsynthesizers mit Phasenregelschleife, eines digitalen Signalgenerators oder eines DDS-Bausteins (Direct Digital Synthesis) ausgeführt. Der Frequenzsynthesizer kann nach einem beliebigen Stand der Technik, z.B. mit programmierbaren fraktionalen oder ganzzahligen Teilern oder mit einem DDS-Baustein ausgeführt sein. Ob die Signale wie dargestellt über die Takteinrichtungen CLK1 und CLK2 oder über andere Mittel, z.B. direkt über einen Frequenzsynthesizer oder eine DDS-Anordnung angepaßt werden oder ob das Signalmuster des Signalgenerators neu berechnet wird, ist natürlich für die Funktion des Verfahrens nicht entscheidend, solange die resultierenden Signale sig1 und sig2 und deren beschriebene Anpassung den obigen Ausführungen entsprechen bzw. auf diese zurückzuführen sind.

Üblicherweise werden die Signalformen in einem niederfrequenten Basisband erzeugt und dann mit Hilfe eines Festfrequenzoszillators z.B. in den Mikrowellenbereich hochgemischt. Generell ist das Verfahren natürlich nicht auf einen bestimmten Frequenzbereich bzw. auf eine bestimmte Wellenart festgelegt sondern z.B. bei akustischen Wellen, elektromagnetischen Wellen anwendbar. Wichtig ist lediglich die Modulierbarkeit der Quelle und die Möglichkeit, die Signale sig1 und sig2 zu mischen. Der Mischvorgang, z.B. eine Multiplikation, kann natürlich auch bei geeigneten Frequenzen arithmetisch in einer Recheneinrichtung erfolgen.

Eine mögliche Ausführungsform zeigt Fig. 5. Das System ist hier so ausgeführt, dass die Station sowohl als Sende- als auch als Empfangseinrichtung fungieren kann.

Im wesentlichen besteht diese kombinierte Station aus einer Antenne A zum Senden und Empfangen von Signalen sig1 bzw. sig2. An die Antenne ist ein Schalter SW angeschlossen, der zwischen einer Empfangs- und einer Sendebetriebsart umschaltet und die Antenne A an entsprechende Baugruppen ankoppelt. Der Ausgang der des Schalters SW für empfangene Signale sig1 ist mit einem Mischer MIX verbünden. Ein zweiter Eingang des Mischers MIX ist mit einer Signalquelle VCO verbunden, wie dies vorstehend beschrieben ist. Der Ausgang des Mischers MIX, über den das Mischsignal sigmix ausgegeben wird, ist mit einem Filter FLT1 verbunden, dessen Ausgang zu der eigentlichen Auswerte- und Steuereinrichtung ASE führt. Diese besteht insbesondere aus einem Analog-/Digitalwandler AD und einem Mikroprozessor $\mu$P. Der Ausgang des Mikroprozessors $\mu$P ist mit einem DDS-Baustein DDS oder einer entsprechenden Anordnung verbunden. Der Mikroprozessor $\mu$P und der DDS-Baustein DDS weisen jeweils einen weiteren Eingang zum Zuführen eines Taktsignals von einem Taktgenerator CLK auf. Der Ausgang des DDS-Bausteins DDS ist, sofern er nicht als Bestanteil dieser ausgebildet ist, mit einem Signalgenerator SGEN2(2) verbunden. Der Signalgenerator SGEN2(2) besteht aus einer Vielzahl von Bauelementen, insbesondere der Signalquelle VCO, deren Ausgang zu dem Mischer MIX, einem Leistungsverstärker PA und einem Frequenzteiler T führt, dem Frequenzteiler T zum Teilen der Signalfrequenz f des Signals sig2 auf einen ganzzahligen Bruchteil f/N, einem weiteren Mischer MIX2, dessen Eingänge mit der Taktquelle CLK und dem Frequenzteiler T verbunden sind, einem zweiten Filter FLT2, dessen Eingang mit dem weiteren Mischer MIX2 verbunden ist, einem Phasenvergleicher bzw. Phasenkomparator Phcmp $\varphi$, dessen Eingänge mit dem zweiten Filter FLT2 und dem DDS-Baustein DDS verbunden sind, und einem Filter FLT3 dessen Eingang mit dem Ausgang des Phasenvergleichers Phcmp und dessen Ausgang mit dem Eingang der Signalquelle VCO verbunden ist.

Mit dem Schalter SW wird gewählt, ob das vom VCO (Voltage Controlled Oscillator) erzeugte Signal über den Leistungsverstärker PA ausgesendet wird oder ob das über die Antenne A empfangene Signal im Mischer MIX mit dem in der Signalquelle VCO erzeugten Signal gemischt wird. Generell ist es insbesondere in Bezug auf die Signalerzeugung vorteilhaft, wenn gleichartige Systeme in der Sende- und der Empfangseinrichtung verwendet werden. Die Signalerzeugung erfolgt in der beispielhaft dargestellten Ausführung mit einem DDS-Frequenzsynthesizer. Als Basistakt dient die Frequenz der Taktquelle bzw. des Festfrequenzoszillators CLK. Aus diesem Basistakt werden alle Signale, Frequenzen und Zeitgrößen für das System, d.h. den Prozessor $\mu$P und den DDS-Baustein DDS abgeleitet. Der DDS-Baustein DDS, der Phasenkomparator Phcmp, die zweiten und dritten Filter FLT2 und FLT3, die Signalquelle VCO, der weitere Mischer MIX2 und der Frequenz-Teiler T bilden für sich genommen einen Frequenzsynthesizer nach dem Stand der Technik. Der Frequenzsynthesizer könnte natürlich auch nach einem anderen Stand der Technik realisiert werden. So kann z.B. der DDS-Baustein DDS durch einen von Prozessor $\mu$P programmierbaren Teiler oder einen digitalen Funktionsgenerator, also einem Speicher mit abgelegtem Signalverlauf und D/A-Wandler, oder einem Frequenz-Synthesizer mit fraktionaler PLL (Phase Lock Loop) ersetzt werden oder z.B. der Mischer MIX2 weggelassen werden.

Wird bei dem System nach Fig. 5 die VCO-Frequenz der Signalquelle bzw. Sendeeinrichtung VCO mit Hilfe des DDS-Bausteins DDS von der Startfrequenz $f_{start}$ ausgehend in der Zeit T um die Bandbreite B hochgestimmt und bei einer entsprechenden ersten Messung die Frequenz $f_{up}$ bestimmt und in einer weiteren Messung mit umgekehrter Sweeprichtung, also von $f_{start}$ + B ausgehend herunter zu $f_{start}$, die Frequenz $f_{Dn}$ bestimmt, so lassen sich basierend auf den bestimmten Frequenzen $f_{up}$ und $f_{Dn}$ die folgenden Lösungen für den Frequenzversatz $\Delta f$ und den Zeitoffset $T_{off}$ aus den oben dargestellten Zusammenhängen herleiten:

$$\Delta f = \frac{f_{up} + f_{dn}}{2} \quad \text{und} \quad T_{off} = \frac{T}{B} \cdot \frac{f_{dn} \cdot B + f_{dn} \cdot f_{Start} - f_{up} \cdot f_{Start}}{2 \cdot (f_{Start} + B/2 - f_{up} - f_{dn})} .$$

Die Frequenzen $f_{up}$ und $f_{Dn}$ werden im Ausführungsbeispiel nach A/D-Wandlung des Mischsignals sigmix im Prozessor $\mu$C mit Hilfe der schnellen Fouriertransformation (FFT) oder einer anderen bekannten Spektralanalysemethode bestimmt.

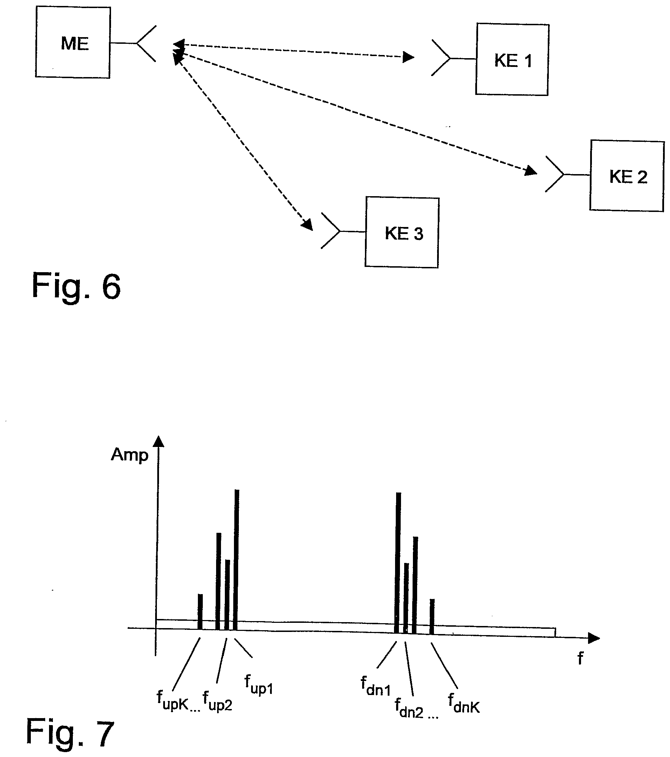

Sehr vorteilhaft ist das Verfahren bei zeitsynchronen Bussystemen anwendbar. Ein Kommunikationssystem nach einem beliebigen Stand der Technik wird hierbei um die beschriebene Ausführung erweitert. Nach erfolgreicher Synchronisation ist es dann z.B. möglich, Anweisungen oder Anweisungsfolgen mit Zeitmarken per Funk zu übertragen und die Anweisungen oder Anweisungsfolgen höchstgenau, z.B. im Mikrosekundenbereich oder sogar im Nanosekundenbereich, nach dem angewiesen Zeitschema abzuarbeiten. Dies kann insbesondere dann notwendig sein, wenn, wie in Fig. 6 dargestellt, von einer Haupt- bzw. Masterstation ME mehrere Kommunikationseinrichtungen KE angewiesen werden, wie z.B. bei einer Werkzeugmaschine, bei der per Funk mehrere Bearbeitungseinrichtungen angesprochen werden, deren Arbeitsabläufe zeitlich sehr kritisch miteinander gekoppelt sind. Alle Kommunikationseinrichtungen werden dann mit dem erfindungsgemäßen Verfahren mit der Mastereinrichtung synchronisiert.

In besonders vorteilhafter Ausführungsform kann die Synchronisation mit dem beschriebenen Verfahren auch derart exakt vollzogen werden, dass eine genaue Kanallängenmessung, also der Abstand zwischen zwei Kommunikationseinrichtungen, z.B. nach einem "Challenge-Response-Verfahren" im Zeitmultiplexbetrieb erfolgen kann. Nach erfolgter verfahrensgemäßer Synchronisation sendet eine erste Station KE 1 oder ME ein Signal zu einer zweiten Station KE 2, die ihrerseits nach einer vereinbarten Zeitspanne ein Antwortsignal zurück überträgt. Aus der Zeitdifferenz zwischen Abfrage und Antwort kann dann unter Berücksichtigung der vereinbarten Zeitspanne die Signallaufzeit und somit die Funkkanallänge berechnet werden. Bei üblichen Systemen ohne die verfahrensgemäße Synchronisation scheitert dieses Verfahren in aller Regel daran, dass zwei räumlich getrennte Systeme keine exakte Zeitspanne, insbesondere keine längere Zeitspanne vereinbaren können, da ihre Taktbasen nicht identisch sind. Durch die Synchronisation kann aber ein hochgenauer Angleich der Takte erfolgen.

Als weiteres Verfahren zur Abstandsmessung zwischen einer Basisstation und einem Transponder sei hierbei auch auf die DE 199 46 161, DE 199 46 204 und DE 199 46 168 verwiesen. Darin sind insbesondere Ausführungen zur Entfernungsmessung mit aktivem Mikrowellenreflektor oder zur Positionsbestimmung von Gegenständen beschrieben, bei denen verzögert auf ein Abfragesignal geantwortet wird. Diese Verfahren sind sehr vorteilhaft mit dem hier beschriebenen Verfahren kombinierbar. Da die linear frequenzmodulierten Signale, die in der Ausführung zur Synchronisation verwendet werden, den Signalen entsprechen, die üblicherweise bei FMCW-Radarsystemen (FMCW: Frequency Modulated Continuos Wave) verwendet werden, können zudem alle bekannten FMCW-Entfernungsmessverfahren günstig mit dem verfahrensgemäßen System und dem Synchronisierungsverfahren kombiniert werden.

Sind die Abstände zwischen der Masterstation ME und mehreren Kommunikationseinrichtungen KE 1, KE 2, KE 3 z.B. mit Hilfe der zuvor dargestellten Messung bekannt, so kann die Zeitsynchronisation noch weiter verbessert werden, indem die Signallaufzeiten mit berücksichtigt werden. In diesem Fall ist es möglich, mehrere verteilte Stationen KE 1, KE 2, KE 3, die auch örtlich weit und unterschiedlich weit auseinander liegen dürfen, höchst genau, d.h. besser als die Signallaufzeitunterschiede zwischen den Stationen, zu synchronisieren.

Sehr vorteilhaft kann das verfahrensgemäße System auch zur Vermessung und Charakterisierung von Funkkanälen eingesetzt werden. Insbesondere eignet sich das System zur Detektion und Bewertung von Mehrfachreflexionen. Treten Mehrfachreflexionen auf, d.h. das ausgesendete Signal der Sendestation gelangt nicht nur über einen sondern über mehrere unterschiedlich lange Wege zur Empfangsstation, so verändert sich das Spektrum aus Fig. 2 in der Art, wie dies in Fig. 7 dargestellt ist. Neben den Frequenzen des kürzesten Übertragungsweges $f_{up1}$ und $f_{dn1}$ treten je nach Anzahl K der Übertragungswege zusätzliche Spektrallinien ($f_{up2}$, $f_{dn2}$, ... , $f_{upK}$, $f_{dnK}$) von längeren Übertragungswegen auf. Bei bekannter Rampensteigung lassen sich aus den Frequenzdifferenzen zwischen den Linien sehr einfach die Laufzeitunterschiede bzw. die Längenunterschiede der Übertragungswege berechnen. Zudem ist jedem Übertragungsweg auch eine genaue Übertragungsdämpfung zuzuordnen. Folglich ist der gesamte Übertragungskanal sehr detailliert zu analysieren. Basierend auf einer solchen verfahrensgemäßen Analyse wäre es zur Verbesserung von Kommunikationssystemen möglich, das Codierungsschema der Datenübertragung bzw. die Datenrate des Kommunikationssystems situationsabhängig an die jeweiligen Kanaleigenschaften anzupassen. Hiermit kann eine verbesserte Übertragungssicherheit und eine erhöhte effektive Datenrate gewährleistet werden. Auch ist es ausführbar, die gemessen Kanaleigenschaften bei der Auswertung des Datenstroms z.B. mit Hilfe einer Rückfaltung, die die unterschiedlichen Längen und Dämpfungen der Übertragungswege kompensiert, zu berücksichtigen.

Die dargestellten Synchronisationsignale haben sehr gute Autokorrelations- und Kreuzkorrelationseigenschaften, so dass es auch möglich ist, einen Datenstrom parallel, also zeitgleich, mit den Synchronisationssignalen zu übertragen. Die Korrelationseigenschaften der Synchronisationssignale bewirken ferner, dass das verfahrensgemäße System und Verfahren generell sehr robust gegen Störungen von anderen Funksystemen ist.

## Patentansprüche

1.  Verfahren zum Synchronisieren einer Senderstation (SE; SE/EE) und einer Empfängerstation (EE; SE/EE), die über eine Schnittstelle (V) miteinander kommunizieren, wobei

    - in der Senderstation (SE; SE/EE) ein Sendesignal (sig1) mit einer Signalquelle (SGEN1) erzeugt und über die Schnittstelle (V) ausgesendet wird und
    - in der Empfängerstation (EE; SE/EE) ein entsprechendes Empfangssignal (esig1) von der Schnittstelle (V) empfangen und unter Verwendung eines Empfänger-Signalquellensignals (sig2) von einer an die senderseitige Signalquelle (SGEN1) angepassten empfängerseitigen Signalquelle (SGEN2) ausgewertet wird,

    **dadurch gekennzeichnet, dass**

    - sowohl auf das Sendesignal (sig1) als auch auf das Empfänger-Signalquellensignal (sig2) eine gleichartige Frequenz-Modulation angewendet wird,
    - das in der Empfängerstation (EE; SE/EE) empfangene Empfangssignal (esig1) mit dem Empfänger-Signalquellensignal (sig2) zu einem Mischsignal (sigmix) gemischt wird und
    - das Mischsignal (sigmix) hinsichtlich einer Frequenzverstimmung analysiert wird.

2.  Verfahren nach Anspruch 1, bei dem auf das Sendesignal (sig1) und auf das Empfänger-Signalquellensignal (sig2) eine Frequenzmodulation angewendet wird und das Mischsignal (sigmix) Spektral analysiert wird.

3.  Verfahren nach Anspruch 1 oder 2, bei dem die Modulation auf das Sendesignal (sig1) und auf das Empfänger-Signalquellensignal (sig2) linear oder streckenweise linear erfolgt.

4. Verfahren nach einem vorstehenden Anspruch, bei dem
auf das Sendesignal (sig1) und auf das Empfänger-Signalquellensignal (sig2) eine Frequenzmodulation angewendet wird, deren Modulationsbandbreite (B) kleiner, insbesondere eine Größenordnung kleiner als deren Signal-Mittenfrequenz ist.

5. Verfahren nach einem vorstehenden Anspruch, bei dem
sich nach dem Mischen in dem Anteil des Empfangssignals (esig1) und dem Anteil des Empfänger-Signalquellensignals (sig2) die Änderungen der Frequenz pro Zeit (t) dieser beiden Signale zueinander um einen Proportionalitätswert ($\alpha$) unterscheiden und die Modulations-Startfrequenzen der Anteile des Empfangssignals (sig1) und des Empfänger-Signalquellensignals (sig2) um einen konstanten Frequenzdifferenzwert $\Delta f$ voneinander abweichen, wobei die gemischten Signalanteile in der Regel einen Zeitversatz ($T_{off}$) zueinander aufweisen.

6. Verfahren nach einem vorstehenden Anspruch, bei dem
zum Erstellen eines Gleichungssystems Parameter aus zwei nacheinander mit zwei verschiedene Modulationsraten ($\mu 1$ bzw. $\mu 2$) gemessen Mischsignalen ($f_{sigmix}(t)$) verwendet werden.

7. Verfahren nach Anspruch 6, bei dem
bei zwei Messungen mit verschiedenen Modulationsraten als Parameter zwei verschiedene Frequenzen (fb1 und fb2) verwendet werden und angenommen wird, dass sich in einem unsynchronisierten Fall die zunächst unbekannten Größen des Frequenzdifferenzwertes ($\Delta f$), des Zeitversatzes ($T_{off}$) und des Proportionalitätswertes ($\alpha$ zwischen dem Empfangssignal (esig1) und dem Empfänger-Signalquellensignal (sig2) nicht oder zumindest nur geringfügig zwischen den beiden Messungen ändern, insbesondere das Gleichungssystem für den Frequenzdifferenzwert ($\Delta f$) und den Zeitversatz ($T_{off}$) gelöst wird gemäß

$$\Delta f = \frac{f_{b2}(t) \cdot \mu_1 - f_{b1}(t) \cdot \mu_2}{\mu_1 - \mu_2} \quad \text{bzw.}$$

$$T_{off} = \frac{(f_{b2}(t) - f_{b1}(t)) + 2 \cdot t \cdot \alpha \cdot (\mu_1 - \mu_2) - 2 \cdot t \cdot (\mu_1 - \mu_2) + \tau \cdot (\mu_1 - \mu_2)}{\alpha \cdot (\mu_1 - \mu_2)} .$$

8. Verfahren nach einem der Ansprüche 1 - 7, bei dem
zur Frequenzsynchronisation eine Frequenzdifferenz ($\Delta f$) zwischen dem Empfangssignal (esig1) und dem Empfänger-Signalquellensignal (sig2) bei bekanntem Faktor ($k=\mu_1/\mu_2$) zwischen zwei verschiedenen Modulationsraten ($\mu 1$ und $\mu 2$) ohne Kenntnis der exakten Modulationsraten ($\mu 1$ bzw. $\mu 2$) bestimmt wird, insbesondere aus

$$\Delta f = \frac{f_{b1}(t) - k \cdot f_{b2}(t)}{1 - k} .$$

9. Verfahren nach einem der Ansprüche 1 - 8, bei dem
zur zeitlichen Synchronisation ein Zeitversatz ($T_{off}$) zwischen dem Empfangssignal (esig1) und dem Empfänger-Signalquellensignal (sig2) unter der Annahme bezüglich des Proportionalitätsfaktors ($\alpha$) bestimmt wird, dass sich bei einer Mittenfrequenz deutlich größer als einer Modulationsbandbreite (B) relative Ungenauigkeiten auf einen Frequenzdifferenzwert ($\Delta f$) deutlich stärker auswirken als auf die Abweichung verschiedener Modulationsraten, insbesondere verwendet wird:

$$T_{off} = \frac{f_{b2}(t) - f_{b1}(t)}{\mu_1 - \mu_2} + \tau .$$

10. Verfahren nach einem der Ansprüche 1 - 8, bei dem
zur zeitlichen Synchronisation ein Zeitversatz ($T_{off}$) zwischen dem Empfangssignal (esig1) und dem Empfänger-Signalquellensignal (sig2) unter Verwendung einer Mittenfrequenz und einer Modulation aus einer gemeinsamen Referenzfrequenzquelle angenommen wird, dass der Proportionalitätsfaktor ($\alpha$) immer in einem arithmetischen Verhältnis zu einer Frequenzdifferenz ($\Delta f$) zwischen den Signalen (sig1, sig2) steht.

**11.** Verfahren nach einem der Ansprüche 1 - 8, bei dem
alle in der Senderstation (SE; SE/EE) erzeugten Signale in einem festen Bezug zu einer senderseitigen Referenzquelle (CLK1) stehen und alle in der Empfängerstation (EE; SE/EE) erzeugten Signale in einem festen Bezug zu einer empfängerseitigen Referenzquelle (CLK2) stehen.

**12.** Verfahren nach einem vorstehenden Anspruch, bei dem
bei der Synchronisierung das Empfänger-Signalquellensignal (sig2) bzw. eine entsprechende Takteinrichtung (CLK2) auf das Empfangssignal (esig1) bzw. auf die Takteinrichtung (CLK1) synchronisiert wird.

**13.** Verfahren nach einem vorstehenden Anspruch, bei dem
bei der Synchronisierung das Empfänger-Signalquellensignal (sig2) versetzt wird, insbesondere um die halbe Dauer einer Modulationsperiode (T/2) versetzt wird, und eine neue Messung gestartet wird, wenn im Spektrum des Mischsignals (sigmix) zwei Frequenzanteile ($f_{up}$ und $f_{dn}$) für die Auswertung nicht ausreichend eindeutig zu detektieren sind.

**14.** Verfahren nach einem vorstehenden Anspruch, bei dem
bei der Synchronisierung das Empfänger-Signalquellensignal (sig2) und/oder das Sender-Signalquellensignal (sig1) adaptiv in mehreren Schritten durch Veränderung der verwendeten Modulation modifiziert werden.

**15.** Verfahren nach Anspruch 14, bei dem
die Synchronisierung in einem ersten Schritt mit einer deutlich geringen Modulationsbandbreite B begonnen und in weiteren Schritten in der Sendeeinrichtung SE und in der Empfangseinrichtung EE die Modulationsbandbreite B schrittweise erhöht und eine exaktere Synchronisation durchgeführt wird.

**16.** Verfahren nach einem vorstehenden Anspruch, bei dem
eine Signalquelle (VCO) von einer Startfrequenz ($f_{start}$) ausgehend in der Dauer einer Modulationsperiode (T) um eine vorbestimmte Bandbreite (B) zu einer Endfrequenz ($f_{stop} = f_{start} + B$) hochgestimmt wird und bei einer ersten Messung eine erste Frequenz ($f_{up}$) bestimmt wird und in einer weiteren Messung mit umgekehrter Modulationsrichtung von der Endfrequenz ($f_{stop} = f_{Start} + B$) ausgehend zur Startfrequenz($f_{Start}$) herunter eine zweite Frequenz ($f_{Dn}$) bestimmt wird, insbesondere basierend auf den bestimmten Frequenzen ($f_{Up}$, $f_{Dn}$) Lösungen für einen Frequenzversatz ($\Delta f$) und einen Zeitversatz ($T_{off}$) bestimmt werden mittels:

$$\Delta f = \frac{f_{up} + f_{dn}}{2} \quad und \quad T_{off} = \frac{T}{B} \cdot \frac{f_{dn} \cdot B + f_{dn} \cdot f_{Start} - f_{up} \cdot f_{Start}}{2 \cdot (f_{Start} + B/2 - f_{up} - f_{dn})}.$$

**17.** Empfängervorrichtung (EE) oder kombinierte Sende-/ Empfängervorrichtung (SE/EE) zum Durchführen eines Verfahrens nach einem vorstehenden Anspruch, mit:

- einem Schnittstelleneingang (A) zum Empfangen eines Empfangssignals (esig1) einer senderseitigen Signalquelle (SGEN1),
- einer empfängerseitigen Signalquelle (SGEN2) zum Erzeugen eines Empfänger-Signalquellensignals (sig2),
- einer Verarbeitungseinrichtung (MIX, ASE) zum Verarbeiten des Empfangssignals (esig1) unter Berücksichtigung des Empfänger-Signalquellensignals (sig2),

**gekennzeichnet durch**

- eine Synchronisierungseinrichtung (MIX, ASE, CLK2, SGEN2) zum Synchronisieren des Empfänger-Signalquellensignals (sig2) auf eine senderseitige Signalquelle (CLK1, SGEN1) und
- eine Modulationseinrichtung zum Erzeugen des Empfänger-Signalquellensignals (sig2) mit einer Frequenzmodulation gleichartig, insbesondere gleich einer Frequenzmodulation, wie sie ursprünglich auf das Sendesignal (sig1) angewendet wurde,
- wobei die Verarbeitungseinrichtung (MIX, ASE) einen Mischer (MIX) zum Mischen des Empfangssignals (esig1) mit dem Empfänger-Signalquellensignal (sig2) zu einem Mischsignal (sigmix) und

- eine Auswerte- und Steuereinrichtung (ASE) zum Analysieren des Mischsignals (sigmix) hinsichtlich einer Frequenzverstimmung aufweist.

18. Empfängervorrichtung (EE) oder kombinierte Sende-/ Empfängervorrichtung (SE/EE) nach Anspruch 17, bei der die Synchronisierungseinrichtung (MIX, ASE, CLK2, SGEN2)die Auswerte- und Steuereinrichtung (ASE) zum Analysieren des Mischsignals (sigmix) hinsichtlich der Frequenzverstimmung ($\Delta$f) und/oder eines Zeitversatzes ($T_{off}$) und zum entsprechenden Synchronisieren der empfängerseitigen Signalquelle (SGEN2) auf die senderseitige Signalquelle (SGEN1) aufweist.

19. Zeitsynchronisiertes Bussystem mit

   - zumindest einer Hauptstation (ME) und
   - einer Vielzahl von Kommunikationseinrichtungen (KE), wobei
   - die Hauptstation (ME) mit den Kommunikationseinrichtungen über eine Schnittstelle (V) kommuniziert,
   - die zumindest eine Hauptstation (ME) als Senderstation (SE; SE/EE) zum Durchführen eines Verfahrens nach einem der Ansprüche 1 bis 16 oder als kombinierte Sende-/Empfängervorrichtung (SE/EE) nach Anspruch 17 oder 18 ausgebildet ist, ein Sendesignal (sig1) mit einer Signalquelle (SGEN1) zu erzeugen und auszusenden,
   - die Vielzahl von Kommunikationseinrichtungen (KE) als Empfängervorrichtung (EE) oder kombinierte Sende-/ Empfängervorrichtung (SE/EE) nach Anspruch 17 oder 18 ausgebildet ist, und
   - zumindest ein Teil der Kommunikationseinrichtungen mit einem Verfahren nach einem der Ansprüche 1 - 13 auf die Hauptstation (ME) synchronisiert wird.

20. Verwendung eines Verfahrens, einer Empfängervorrichtung bzw. eines Bussystems nach einem der vorstehenden Ansprüche zur Vermessung durch Aussendung eines Signals vom Sender zum Empfänger, dortigem Mischen mittels der gleichartigen Frequenzmodulation nach einem vorstehenden Ansprüche und Charakterisierung von Funkkanälen durch Bestimmung einer Anzahl (K) der Übertragungs- oder Laufwege und deren Amplitude, Übertragungsdämpfung, Laufzeit und/oder Laufzeitunterschiede.

21. Verwendung eines Verfahrens, einer Empfängervorrichtung bzw. eines Bussystems nach Anspruch 20 zum Erfassen und Bewerten von Mehrfachreflexionen durch Analyse einzelner Spektrallinien ($f_{up1}$, $f_{dn1}$, ... , $f_{upK}$, $f_{dnK}$, die verschiedenen der Übertragungs- oder Laufwege zugeordnet sind, hinsichtlich Amplitudenunterschieden oder Frequenzunterschieden der einzelnen Spektrallinien.

**Claims**

1. A method for synchronization of a transmitter station (SE; SE/EE) and a receiver station (EE; SE/EE) which communicate with each other over an interface (V), wherein:

   - in the transmitter station (SE; SE/EE), generating a transmitter signal (sig1) with a signal source (SGEN1) and transmitting thereof via the interface (V), and;
   - in the receiver station (EE; SE/EE), receiving a corresponding receiver signal (esig1) from the interface (V), and evaluating thereof by using a receiver signal source signal (sig2) from a receiver-side signal source (SGEN2) matched to the transmitter-side signal source (SGEN1),

   **characterized in that**

   - using an equivalent frequency modulation on both the transmitter signal (sig1) and the receiver signal source signal (sig2);
   - mixing the receiver signal (esig1) received in the receiver station (EE; SE/EE) with the receiver signal source signal (sig2) to form a mixed signal (sigmix), and
   - analyzing the mixed signal (sigmix) in respect of a frequency detuning.

2. The method according to claim 1, in which a frequency modulation is applied to the transmitter signal (sig1) and to the receiver signal source signal (sig2) and the spectrum of the mixed signal (sigmix) is analyzed.

3. The method according to claim 1 or 2, in which

the modulation is performed linearly or in part linearly on the transmitter signal (sig1) and on the receiver signal source signal (sig2).

4. The method according to one of the preceding claims, in which
a frequency modulation is applied to the transmitter signal (sig1) and to the receiver signal source signal (sig2), wherein the modulation bandwidth (B) is smaller, in particular in an order smaller, than its signal mid frequency.

5. The method according to one of the preceding claims, in which
after mixing in the proportion of the receiver signal (esig1) and the proportion of the receiver signal source signal (sig2), changes of the frequency per time (t) of these two signals in relation to each other differ by a proportionality value ($\alpha$), and wherein the modulation start frequencies of the proportions of the receiver signal (sig1) and of the receiver signal source signal (sig2) deviate from each other by a constant frequency difference value $\Delta f$, wherein the mixed signal proportions as a rule show a time offset ($T_{off}$) in relation to each other.

6. The method according to one of the preceding claims, in which
parameters from two mixed signals ($f_{sigmix}(t)$), measured consecutively with two different modulation rates ($\mu1$ or $\mu2$), are used in order to create an equation system.

7. The method according to claim 6, in which
in two measurements with different modulation rates as parameter, two different frequencies (fb1 and fb2) are used, and it is assumed that in an unsynchronized case the initially unknown variables of the frequency difference value ($\Delta f$), of the time offset ($T_{off}$) and of a proportionality value ($\alpha$) between the receiver signal (esig1) and the receiver signal source signal (sig2) does not change or at least only changes slightly between the two measurements, especially the equation system for the frequency difference value ($\Delta f$) and the time offset ($T_{off}$) is resolved according to:

$$\Delta f = \frac{f_{b2}(t)\cdot\mu_1 - f_{b1}(t)\cdot\mu_2}{\mu_1 - \mu_2}$$

or rather

$$T_{off} = \frac{(f_{b2}(t) - f_{b1}(t)) + 2\cdot t\cdot\alpha\cdot(\mu_1 - \mu_2) - 2\cdot t\cdot(\mu_1 - \mu_2) + \tau\cdot(\mu_1 - \mu_2)}{\alpha\cdot(\mu_1 - \mu_2)}.$$

8. The method according to one of claims 1 to 7, in which
for frequency synchronization, a frequency difference ($\Delta f$) between the receiver signal (esig1) and the receiver signal source signal (sig2) with a known factor (k=$\mu1/\mu2$) between two different modulation rates ($\mu1$ and $\mu2$) without knowledge of the exact modulation rates ($\mu1$ or $\mu2$) is determined, in particular by:

$$\Delta f = \frac{f_{b1}(t) - k\cdot f_{b2}(t)}{1-k}.$$

9. The method according to one of claims 1 to 8, in which
for time synchronization, a time offset ($T_{off}$) between the receiver signal (esig1) and the receiver signal source signal (sig2) is determined, on the assumption regarding the proportionality factor ($\alpha$), that at a mid frequency much larger than a modulation bandwidth (B), relative inaccuracies affect on a frequency difference value ($\Delta f$) much more than on the deviation of different modulation rates, in particular by using

$$T_{off} = \frac{f_{b2}(t) - f_{b1}(t)}{\mu_1 - \mu_2} + \tau.$$

10. The method according to one of claims 1 to 8, in which
for time synchronization, a time offset ($T_{off}$) between the receiver signal (esig1) and the receiver signal source signal (sig2) is determined by using a mid frequency and a modulation from a common reference frequency source, it is assumed that the proportionality factor ($\alpha$) always being an arithmetic ratio to a frequency difference ($\Delta f$) between

the signals (sig1, sig2).

**11.** The method according to one of claims 1 to 8, in which
all signals generated in the transmitter station (SE; SE/EE) are related in a fixed ratio to a transmitter-side reference source (CLK1), and all signals generated in the receiver station (EE; SE/EE) are related in a fixed ratio to a receiver-side reference source (CLK2).

**12.** The method according to one of the preceding claims, in which
for the synchronization, the receiver signal source signal (sig2) or rather a respective clock unit (CLK2) is synchronized to the receiver signal (esig1) or rather to the clock unit (CLK1).

**13.** The method according to one of the preceding claims, in which
for the synchronization, the receiver signal source signal (sig2) is offset, in particular offset by half of the duration of a modulation period (T/2), and a new measurement is started, if in the spectrum of the mixed signal (sigmix) two frequency components ($t_{up}$ and $f_{dn}$) are not to be sufficiently uniquely detected for the evaluation.

**14.** The method according to one of the preceding claims, in which
for the synchronization, the receiver signal source signal (sig2) and/or the transmitter signal source signal (sig1) are modified adaptively in a number of steps by changing the modulation used.

**15.** The method according to claim 14, in which
the synchronization is started in a first step with a far smaller modulation bandwidth B, and in further steps in the transmitter station SE and in the receiver station EE, the modulation bandwidth B is increased stepwise and a more exact synchronization is performed.

**16.** The method according to one of the preceding claims, in which
a signal source (VCO) is tuned upwards, starting from a start frequency ($f_{start}$) in the duration of a modulation period (T) by a prespecified bandwidth (B) to an end frequency ($f_{stop}=f_{start}+B$), and wherein in a first measurement, a first frequency ($f_{up}$) is determined, and in a further measurement with a reversed direction of modulation, starting from the end frequency ($f_{stop}=f_{start}+B$) down to the start frequency ($f_{start}$), a second frequency ($f_{Dn}$) is determined, especially based on the frequencies determined ($f_{Up}$, $f_{Dn}$), results of a frequency offset ($\Delta f$) and a time offset ($T_{off}$) are determined by means of:

$$\Delta f = \frac{f_{up}+f_{dn}}{2} \qquad \text{and} \qquad T_{off} = \frac{T}{B} \cdot \frac{f_{dn}\cdot B + f_{dn}\cdot f_{Start} - f_{up}\cdot f_{Start}}{2\cdot(f_{Start}+B/2 - f_{up}-f_{dn})}.$$

**17.** A receiver station (EE) or a combined transmitter-/receiver station (SE/EE) for performing a method according to one of the preceding claims, comprising:

  - an interface input (A) to receive a receiver signal (esig1) of a transmitter-side signal source (SGEN1);
  - a receiver-side signal source (SGEN2) to generate a receiver signal source signal (sig2);
  - a processing unit (MIX, ASE) to process the receiver signal (esig1) by taking account of the receiver signal source signal (sig2);

  **characterized by**

  - a synchronization unit (MIX, ASE, CLK2, SGEN2) to synchronize the receiver signal source signal (sig2) to a transmitter-side signal source (CLK1, SGEN1), and
  - a modulation unit to generate the receiver signal source signal (sig2) with a frequency modulation, equivalently, in particular equivalent to a frequency modulation, as was originally applied to the transmitter signal (sig1),
  - wherein the processing unit (MIX, ASE) comprises a mixer (MIX) for mixing the receiver signal (esig1) with the receiver signal source signal (sig2) to a mixed signal (sigmix), and
  - an analysis and control device (ASE) for analyzing the mixed signal (sigmix) in respect of a frequency detuning.

**18.** The receiver station (EE) or combined transmitter-/receiver station (SE/EE) according to claim 17, in which
the synchronization unit (MIX, ASE, CLK2, SGEN2) comprises the analysis and control device (ASE) for analyzing the mixed signal (sigmix) regarding to the frequency detuning ($\Delta f$) and/or a time offset ($T_{off}$) and for synchronization of the receiver-side signal source (SGEN2) to the transmitter-side signal source (SGEN1), correspondingly.

19. A time-synchronized bus system, comprising:

- at least one master station (ME), and
- a plurality of communication units (KE), wherein
- the master station (ME) is communicating with the communication units via an interface (V),
- wherein the at least one master station (ME) as a transmitter station (SE; SE/EE) for performing a method according to one of claims 1 to 16, or as a combined transmitter-/receiver station (SE/EE) according to claim 17 or 18, is adapted to generate and transmit a transmitting signal (sig1) by means of a signal source (SGEN1),
- wherein the plurality of communication units (KE) is adapted as a receiver station (EE) or a combined transmitter-/receiver station (SE/EE) according to claim 17 or 18, and
- at least a part of the communication units is synchronized to the master station (ME) by means of a method according to one of claims 1 to 13.

20. Usage of a method, a receiver station or a bus system according to one of the preceding claims for surveying by transmitting a signal from a transmitter to a receiver, mixing there by means of the equivalent frequency modulation according to one of the preceding claims, and characterizing of radio channels by determining a number (K) of the transmission or propagation paths and the amplitude, transmission loss, runtime and/or runtime differences thereof.

21. The usage of a method, a receiver station or a bus system according to claim 20 for detection and evaluation of multiple reflections by analyzing single spectral lines ($f_{up1}$, $f_{dn1}$, ..., $f_{upK}$, $f_{dnK}$) which are assigned to different of the transmission or propagation paths, in view of amplitude differences or frequency differences of the single spectral lines.

**Revendications**

1. Procédé de synchronisation d'une station émettrice (SE ;SE/EE) et une station réceptrice (EE ;SE/EE), qui communiquent par l'intermédiaire d'une interface (V) l'une avec l'autre, dans lequel

- dans la station émettrice (SE ;SE/EE) un signal d'émission (sig1) est généré avec une source de signal (SGEN1) et envoyé via l'interface (V) et
- dans la station réceptrice (EE ;SE/EE) un signal de réception correspondant (esig1) est reçu par l'interface (C) et évalué en utilisant un signal de source de signal d'émetteur (sig2) par une source de signal (SGEN1) du côté du récepteur adaptée à la source de signal du côté d'émetteur (SGEN1),

**caractérisé en ce que**

- tant sur le signal d'émission (sig1) que sur le signal de source de signal de récepteur (sig2) une modulation de fréquence identique est employée,
- le signal de réception (esig1) reçu dans la station de réception (EE ;SE/EE) est mélangé avec le signal de source de signal de récepteur (sig2) en un signal de mélange (sigmix) et
- le signal de mélange (sigmix) est analysé en ce qui concerne une non résonance des fréquences.

2. Procédé selon la revendication 1, dans lequel sur le signal d'émission (sig1) et sur le signal de source de signal de récepteur (sig2) une modulation de fréquence est employée et le spectre du signal de mélange (sigmix) est analysé.

3. Procédé selon la revendication 1 ou 2, dans lequel la modulation sur le signal d'émission (sig1) et sur le signal de source de signal de récepteur (sig2) a lieu linéairement ou linéairement par endroits.

4. Procédé selon une revendication précédente, dans lequel sur le signal d'émission (ig1) et sur le signal de source de signal de récepteur (sig2) une modulation de fréquence est employée, dont la largeur de bande de modulation (B) est plus petite, notamment d'un ordre de grandeur plus petit que sa fréquence moyenne de signal.

5. Procédé selon une revendication précédente, dans lequel après le mélange dans la fraction de signal de réception (esig1) et la fraction du signal de source de signal de récepteur (sig2) les variations de la fréquence par temps (t) de ces deux signaux se différencient l'un par rapport à l'autre d'une valeur de proportionnalité ($\alpha$) et les fréquences de début de modulation des fractions de signal de réception (sig1) et du signal de source de signal de récepteur (sig2) diffèrent l'une de l'autre d'une valeur de différence de fréquence constante $\Delta f$, dans lequel les fractions de signal mélangées présentent généralement un décalage temporel ($T_{off}$) les unes par rapport aux autres.

6. Procédé selon une revendication précédente, dans lequel pour établir un système d'équation des paramètres provenant de deux signaux de mélange ($f_{sigmix}(t)$) mesurés avec deux taux de modulation différents ($\mu 1$ resp. $\mu 2$) sont utilisés.

7. Procédé selon la revendication 6, dans laquelle lors de deux mesures avec des taux de modulation comme paramètres deux fréquences différentes (fb1 et fb2) sont utilisées et adoptées, en ce que dans un cas non synchronisé les grandeurs d'abord inconnues de la valeur de différence de fréquence ($\Delta f$), du décalage temporel ($T_{off}$) et de la valeur de proportionnalité ($\alpha$) entre le signal de réception (esig1) et le signal de source de signal de récepteur (sig2) ne varient pas ou au moins seulement de manière minime entre les deux mesures, notamment le système d'équation pour la valeur de différence de fréquence ($\Delta f$) et le décalage temporel ($T_{off}$) est déclenché conformément à :

$$\Delta f = \frac{f_{b2}(t) \cdot \mu_1 - f_{b1}(t) \cdot \mu_2}{\mu_1 - \mu_2}$$

ou

$$T_{off} = \frac{(f_{b2}(t) - f_{b1}(t)) + 2 \cdot t \cdot \alpha \cdot (\mu_1 - \mu_2) - 2 \cdot t \cdot (\mu_1 - \mu_2) + \tau \cdot (\mu_1 - \mu_2)}{\alpha \cdot (\mu_1 - \mu_2)}$$

respectivement.

8. Procédé selon une des revendications 1-7, dans lequel à des fins de synchronisation de fréquence, une différence de fréquence ($\Delta f$) entre le signal de réception (esig1) et le signal de source de signal de récepteur (sig2) en présence d'un facteur connu (k=$\mu 1/\mu 2$) entre deux taux de modulation différents ($\mu 1$ et $\mu 2$) est déterminée sans connaissance des taux de modulation exacts ($\mu 1$ resp. $\mu 2$), notamment à partir de

$$\Delta f = \frac{f_{b1}(t) - k \cdot f_{b2}(t)}{1 - k}$$

9. Procédé selon une des revendications 1-8, dans lequel à des fins de synchronisation temporelle, un décalage temporel ($T_{off}$) entre le signal de réception (esig1) et le signal de source de signal de récepteur (sig2) est déterminé en postulant relativement au facteur de proportionnalité ($\alpha$) qu'au cas où une fréquence moyenne est considérablement plus grande qu'une largeur de bande de modulation (B) des imprécisions relatives influent considérablement plus fort sur une valeur de différence de fréquence ($\Delta f$) que sur l'écart de différents taux de modulation, notamment on utilise :

$$T_{off} = \frac{f_{b2}(t) - f_{b1}(t)}{\mu_1 - \mu_2} + \tau$$

10. Procédé selon une des revendications 1-8, dans lequel à des fins de synchronisation temporelle un décalage temporel ($T_{off}$) entre le signal de réception (esig1) et le signal de source de signal de récepteur (sig2) est adopté en utilisant une fréquence moyenne et une modulation provenant d'une source de fréquence de référence commune, en ce que le facteur de proportionnalité ($\alpha$) est toujours en rapport arithmétique avec une différence de fréquence ($\Delta f$) entre les signaux (sig1,sig2).

**11.** Procédé selon une des revendications 1-8, dans lequel tous les signaux générés dans la station émettrice (SE ;SE/EE) sont dans un rapport fixe avec une source de référence du côté d'émetteur (CLK1) et tous les signaux générés dans la station émettrice (EE ;SE/EE) sont dans un rapport fixe avec une source de référence du côté d'émetteur (CLK2).

**12.** Procédé selon une revendication précédente, dans lequel lors de la synchronisation, le signal de source de signal de récepteur (sig2), resp. un dispositif de synchronisation correspondant (CLK2) est synchronisé sur le signal de réception (esig1), resp. sur le signal de synchronisation (CLK1).

**13.** Procédé selon une revendication précédente, dans lequel lors de la synchronisation, le signal de source de signal de récepteur (sig2) est décalé, notamment est décalé d'une demie durée d'une période de modulation (T/2) et une nouvelle mesure est démarrée, lorsque dans le spectre du signal de mélange (sigmix) deux fractions de fréquence ($f_{up}$ et $f_{dn}$) ne sont pas suffisamment claires à détecter pour l'évaluation.

**14.** Procédé selon une revendication précédente, dans lequel lors de la synchronisation, le signal de source de signal de récepteur (sig2) et/ou le signal de source de signal d'émetteur (sig1) sont modifiés de manière adaptative en plusieurs étapes en modifiant la modulation utilisée.

**15.** Procédé selon la revendication 14, dans lequel la synchronisation est commencée dans une première étape avec une largeur de bande de modulation B considérablement plus petite et dans les étapes suivantes dans le dispositif d'émission SE et dans le dispositif de réception EE la largeur de bande de modulation B est augmentée progressivement et une synchronisation plus exacte est effectuée.

**16.** Procédé selon une revendication précédentes, dans lequel une source de signal (VCO) est stabilisée à partir d'une fréquence de début ($f_{start}$) sur la durée d'une période de modulation (T) d'une largeur de bande prédéterminée (B) à une fréquence de fin ($f_{stop} = f_{start} + B$) et lors d'une première mesure une première fréquence ($f_{up}$) est déterminée et lors d'une autre mesure avec une direction de modulation inverse de la fréquence de fin ($f_{stop} = f_{start} + B$) à la fréquence de début ($f_{start}$) une deuxième fréquence ($f_{Dn}$) est déterminée, notamment sur la base des fréquences déterminées ($f_{Up}$, $f_{Dn}$) des solutions pour un décalage de fréquence ($\Delta f$) et un décalage temporel ($T_{off}$) sont déterminées au moyen de :

$$\Delta f = \frac{f_{up} + f_{dn}}{2} \quad \text{et} \quad T_{off} = \frac{T}{B} \cdot \frac{f_{dn} \cdot B + f_{dn} \cdot f_{Start} - f_{up} \cdot f_{Start}}{2 \cdot (f_{Start} + B/2 - f_{up} - f_{dn})}.$$

**17.** Dispositif de réception (EE) ou dispositif d'émission/réception combiné (SE/EE) pour mettre en oeuvre un procédé selon une revendication précédente, comportant :

- une entrée d'interface (A) pour recevoir un signal de réception (esig1) d'une source de signal du côté d'émetteur (SGEN1),
- une source de signal du côté du récepteur (SGEN2) pour générer un signal de source de signal de récepteur (sig2),
- un dispositif de traitement (MIX,ASE) pour traiter le signal de réception (sig1) en tenant compte du signal de source de signal de récepteur (sig2),

**caractérisé par**

- un dispositif de synchronisation (MIX,ASE,CLK2,SGEN2) pour synchroniser le signal de source de signal de récepteur (sig2) sur une source de signal du côté d'émetteur (CLK1,SGEN1) et
- un dispositif de modulation pour générer le signal de source de signal de récepteur (sig2) avec une modulation de fréquence identique, notamment similaire à une modulation de fréquence, telle qu'elle a été employée à l'origine sur le signal d'émission (sig1),
- dans lequel le dispositif de traitement (MIX,ASE) présente un mélangeur (MIX) pour mélanger le signal de réception (esig1) avec le signal de source de signal de récepteur (sig2) en un signal de mélange (sigmix) et
- un dispositif d'évaluation et de commande (ASE) pour analyser le signal de mélange (sigmix) en ce qui concerne une non résonance des fréquences.

**18.** Dispositif de réception (EE) ou dispositif d'émission/réception combiné (SE/EE) selon la revendication 17, dans lequel le dispositif de synchronisation (MIX,ASE,CLK2,SGEN2) présente le dispositif d'évaluation et de commande (ASE) pour analyser le signal de mélange (sigmix) en ce qui concerne la non résonance des fréquences ($\Delta$f) et/ou un décalage temporel ($T_{off}$) et pour la synchronisation correspondante de la source de signal du côté du récepteur (SGEN2) sur la source de signal du côté d'émetteur (SGEN1).

**19.** Système de bus synchronisé temporellement comportant :

   - au moins une station principale (ME) et
   - une pluralité de dispositifs de communication (KE), dans lequel
   - la station principale (ME) communique avec les dispositifs de communication via une interface (V),
   - au moins une station principale (ME) est configurée comme station émettrice (SE ;SE/EE) pour mettre en oeuvre un procédé selon une des revendications 1 à 16 ou comme dispositif d'émission/réception combiné (SE/EE) selon la revendication 17 ou 18, afin de générer et émettre un signal d'émission (sig1) avec une source de signal (SGEN1),
   - la pluralité de dispositifs de communication (KE)est conçue comme un dispositif de réception (EE) ou un dispositif d'émission/réception combiné (SE/EE) selon la revendication 17 ou 18, et
   - au moins une partie des dispositifs de communication est synchronisée sur la station principale (ME) avec un procédé selon une des revendications 1-13.

**20.** Utilisation d'un procédé, d'un dispositif de réception, resp. d'un système de bus selon une des revendications précédentes pour mesurer par l'émission d'un signal de l'émetteur au récepteur le mélange qui y a lieu au moyen de la modulation de fréquence identique selon une revendication précédente et la caractérisation des canaux radio en déterminant un nombre (K) des trajets de propagation ou transmission et leur amplitude, l'atténuation de transmission, la durée et/ou les différences de durée.

**21.** Utilisation d'un procédé, d'un dispositif d'émission, resp. d'un système de bus selon la revendication 20 pour détecter et évaluer des réflexions multiples en analysant des lignes spectrales individuelles ($f_{up1}$, $f_{dn1}$, ..., $f_{upk}$, $f_{dnk}$), qui sont coordonnées différemment aux trajets de propagation ou transmission, en ce qui concerne les différences d'amplitudes ou différences de fréquence des lignes spectrales individuelles.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- WO 9216063 A
- US 5936961 A1
- DE 19946161
- DE 19946204
- DE 19946168